# EUROPEAN PATENT APPLICATION

(11) **EP 4 556 221 A1**
(43) Date of publication of application: **21.05.2025**
(21) Application number: 23839487.8
(22) Date of filing: 30.06.2023
(51) Int. Cl.: B32B 27/04, A47B 96/20, B32B 27/00, D06N 7/06

(54) **RESIN-IMPREGNATED DECORATIVE PAPER AND RESIN-IMPREGNATED DECORATIVE PANEL**

(30) Priority: 15.07.2022 JP 2022113972
(71) Applicant: Toppan Holdings Inc., Tokyo 110-0016 (JP)
(72) Inventor: MIZUKAMI, Ryohei, Tokyo 110-0016 (JP); OTA, Shin, Tokyo 110-0016 (JP)
(74) Representative: TBK
(86) International application number: PCT/JP2023/024331
(87) International publication number: WO 2024/014315

(57) **Abstract**

Resin-impregnated decorative paper includes decorative paper impregnated with an impregnation resin, and the decorative paper includes base paper, a pattern layer formed by printing on the upper side UP of the base paper, and a foamable resin layer stacked on the upper side UP of the pattern layer and containing a foaming agent. The foamable resin layer foams to expand in volume, thereby forming an uneven pattern on the upper UP surface of the pattern layer, and the uneven pattern has a maximum height of 20 µm or more and 90 µm or less in a vertical direction from a recess to a projection.

## Description

### [Technical Field]

The present invention relates to resin-impregnated decorative paper and a resin-impregnated decorative plate.

This application claims the benefit of priority from Japanese Patent Application No. 2022-113972 filed in Japan on July 15, 2022, the description of which is incorporated herein by reference.

### [Background Art]

Resin-impregnated decorative plates obtained by bonding resin-impregnated decorative paper impregnated with a thermosetting resin to substrates are decorative plates having high surface hardness and excellent resistances, such as contamination resistance, wear resistance, heat resistance, and water resistance. Resin-impregnated decorative plates are thus used as surface materials for furniture such as desks or surface materials for fixtures such as shop counters. For a resin-impregnated decorative plate that requires a tactile sensation on its surface, such a tactile sensation can be imparted by pressing the surface of the resin-impregnated decorative plate with a press plate having an uneven pattern to emboss the uneven pattern on the surface of the resin-impregnated decorative plate. Examples of resin-impregnated decorative plates include a low-pressure melamine decorative plate obtained by bonding resin-impregnated decorative paper impregnated with a melamine resin to a substrate such as a particle board under low pressure.

A resin-impregnated decorative plate having a tactile sensation on its surface is described in PTL 1. The resin-impregnated decorative plate described in PTL 1 has an uneven pattern formed by causing a foaming agent placed in a pattern layer to foam. This can impart a tactile sensation to the surface of the resin-impregnated decorative plate without embossing. Accordingly, since a press plate used for embossing is not needed, production costs can be reduced.

### [Citation List]

### [Patent Literature]

[PTL 1] JP 2019-206109 A

### [Summary of Invention]

### [Technical Problem]

However, the resin-impregnated decorative plate described in PTL 1 has a large surface roughness in the uneven pattern formed by the expansion of the foaming agent, and thus the plate has a good tactile sensation but may have poor scratch resistance and contamination resistance.

On the basis of the above circumstances, the present disclosure relates to a resin-impregnated decorative plate with a surface having a tactile sensation imparted by the foaming of a foaming agent and has been made in view of the above problem. An object of the present disclosure is to provide a resin-impregnated decorative plate that has a surface roughness combining a good tactile sensation with high scratch resistance and contamination resistance, and to provide resin-impregnated decorative paper used for the resin-impregnated decorative plate.

### [Solution to Problem]

In order to achieve the object, the present invention proposes the following means.

A resin-impregnated decorative paper according to the present disclosure is resin-impregnated decorative paper including decorative paper impregnated with an impregnation resin, in which the decorative paper includes a base paper, a pattern layer formed by printing on the upper side of the base paper, and a foamable resin layer stacked on the upper side of the pattern layer and containing a foaming agent, the foamable resin layer foams to expand in volume, thereby forming an uneven pattern on the upper surface of the pattern layer, and the uneven pattern has a maximum height of 20 µm or more and 90 µm or less in a vertical direction from a recess to a projection.

In the resin-impregnated decorative paper, the foaming agent may have a foaming start temperature of 150 °C or more and 220 °C or less and a post-foaming particle size of 100 µm or more and 200 µm or less.

In the resin-impregnated decorative paper, the base paper may be titanium paper.

In the resin-impregnated decorative paper, the impregnation resin may contain a melamine resin.

A resin-impregnated decorative plate according to the present disclosure includes the above-mentioned resin-impregnated decorative paper and a substrate bonded to the lower side of the resin-impregnated decorative paper.

### [Advantageous Effects of the Invention]

The resin-impregnated decorative paper and the resin-impregnated decorative plate according to the present disclosure can provide a resin-impregnated decorative plate that has a surface roughness combining a good tactile sensation with high scratch resistance and contamination resistance, and provide a resin-impregnated decorative paper used for the resin-impregnated decorative plate.

### [Brief Description of Drawings]

Fig. 1 is a cross-sectional view of a resin-impregnated decorative paper before foaming according to an embodiment.
Fig. 2 is a cross-sectional view of a resin-impregnated decorative plate after foaming according to the embodiment.

### [Description of Embodiments]

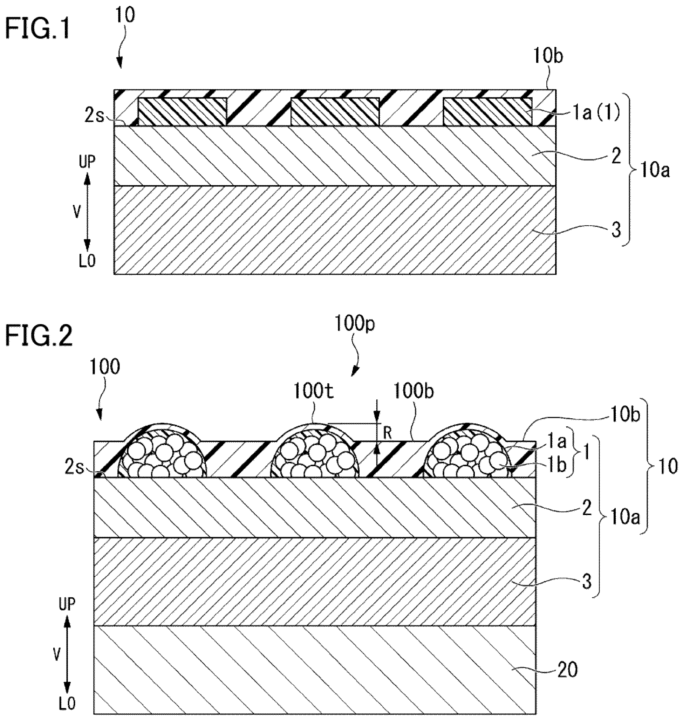

An embodiment of the present invention will now be described with reference to Figs. 1 and 2.

Fig. 1 is a cross-sectional view of resin-impregnated decorative paper 10 before foaming according to the present embodiment. Fig. 2 is a cross-sectional view of a resin-impregnated decorative plate 100 obtained by bonding a substrate 20 to the resin-impregnated decorative paper 10 in Fig. 1 and foaming a foamable resin layer 1.

In the present embodiment, as illustrated in Figs. 1 and 2, the thickness direction of the resin-impregnated decorative paper 10 and the resin-impregnated decorative plate 100 is defined as the vertical direction V, the side of the resin-impregnated decorative paper 10 to which the substrate 20 is bonded is defined as "lower LO" in the vertical direction V, and the opposite side to the side of the resin-impregnated decorative paper 10 to which the substrate 20 is bonded is defined as "upper UP" in the vertical direction V.

As illustrated in Fig. 2, the foamable resin layer 1 is foamed to form multiple recesses 100b and multiple projections 100t. For an uneven pattern 100p, the maximum height in the vertical direction V from the bottom of the recesses 100b (in the present embodiment, spaces between adjacent projections 100t) to the top of the projections 100t is defined as surface roughness R. Although the number of recesses 100b and projections 100t is assumed to be multiple, the number of recesses 100b and projections 100t is not limited to a specific number.

The resin-impregnated decorative plate 100 includes the resin-impregnated decorative paper 10 and the substrate 20. The substrate 20 is bonded to the lower side LO of the resin-impregnated decorative paper 10 by hot pressing. The substrate 20 may be a board such as a particle board or a medium-density fiberboard (MDF).

The resin-impregnated decorative paper 10 is formed by drying decorative paper 10a impregnated with an impregnation resin 10b. When the decorative paper 10a is impregnated with the impregnation resin 10b, the impregnation resin 10b penetrates the decorative paper 10a to cover the upper surface of the decorative paper 10a. When the decorative paper 10a impregnated with the impregnation resin 10b is dried, the impregnation resin 10b cures. As a result, the resin-impregnated decorative paper 10 has excellent properties such as high surface hardness, contamination resistance, wear resistance, heat resistance, and water resistance.

The impregnation resin 10b is a known thermosetting resin used for resin-impregnated decorative plates. In the present embodiment, the impregnation resin 10b contains a melamine resin. Because melamine resins have high strength, contamination resistance, wear resistance, heat resistance, and water resistance, it is desirable to use a melamine resin as the impregnation resin 10b.

It should be noted that the impregnation resin 10b may not contain a melamine resin.

The decorative paper 10a includes the foamable resin layer 1, a pattern layer 2, and a base paper 3.

The base paper 3 is a layer stacked at the lower side LO of the decorative paper 10a. The base paper 3 is a known fibrous sheet that can be impregnated with the impregnation resin 10b. The base paper 3 may be, for example, titanium paper or tissue paper. It is desirable to use titanium paper having good concealability as the base paper 3 in order to prevent the transmission of the color and texture of the substrate 20 after the substrate 20 is bonded.

The pattern layer 2 is a layer printed on the upper side UP of the base paper 3 and formed by printing a pattern such as wood grain, stone grain, or sand grain. A known printing method such as gravure printing, offset printing, flexographic printing, silk-screen printing, or inkjet printing may be adopted for the printing.

The foamable resin layer 1 is a layer printed on the upper side UP of the pattern layer 2 and formed from a foamable-resin-layer resin 1a in which a foaming agent 1b is mixed. The foamable resin layer 1 is a layer that adds a stereoscopic effect to the upper UP surface 2s of the pattern layer 2 and is printed in any position on the upper UP surface 2s of the pattern layer 2. The foamable resin layer 1 may be printed in either a position that matches the pattern of the pattern layer 2 or a position that does not match. A known printing method such as gravure printing, offset printing, flexographic printing, silk-screen printing, or inkjet printing may be adopted for the printing. A known printing ink suitable for the printing method adopted may be used for the foamable-resin-layer resin 1a.

The foaming agent 1b is made up of thermally expandable microcapsules. The thermally expandable microcapsules used as the foaming agent 1b are resin capsules containing foaming components such as hydrocarbon and foam to expand in volume when heated. The thermally expandable microcapsules used as the foaming agent 1b are formed from a resin such as an epoxy resin, a casein resin, or an acrylic resin.

When the foaming agent 1b foams, the foamable resin layer 1 forms the uneven pattern 100p on the upper UP surface 2s of the pattern layer 2.

The foaming agent 1b desirably has a post-foaming particle size of 100 µm or more and 200 µm or less. When the foaming agent 1b has a post-foaming particle size smaller than 100 µm, the uneven pattern 100p formed by the foaming of the foaming agent 1b has a small surface roughness R, which may result in a weak tactile sensation. In contrast, when the foaming agent 1b has a post-foaming particle size greater than 200 µm,the uneven pattern 100p has a great surface roughness R, which may result in low scratch resistance and contamination resistance.

The foaming agent 1b desirably has a foaming start temperature of 150 °C or more and 220 °C or less. When the foaming agent 1b has a foaming start temperature lower than 150°C, and the resin-impregnated decorative paper 10 and the substrate 20 are bonded together by hot pressing, the foaming agent 1b starts foaming early in the hot pressing, and accordingly the foamable resin layer 1 collapses due to a longer time of pressurization after the foaming of the foaming agent 1b. As a result, the uneven pattern 100p may have a weak tactile sensation. In contrast, when the foaming agent 1b has a foaming start temperature higher than 220 °C, the foaming agent 1b cannot sufficiently foam during heating, and the uneven pattern 100p may have a weak tactile sensation.

A method for producing the resin-impregnated decorative plate 100 will now be described.

First, the pattern layer 2 is formed by printing on the upper side UP of the base paper 3. The upper UP surface 2s of the pattern layer 2 is printed with the foamable resin layer 1 formed from the foamable-resin-layer resin 1a in which the foaming agent 1b is mixed. As a result, the decorative paper 10a including the base paper 3, the pattern layer 2, and the foamable resin layer 1 is formed.

In this paper, the foam particle size after the foaming of the foaming agent 1b contained in the foamable resin layer 1 is 100 µm or more and 200 µm or less. The foaming start temperature of the foaming agent 1b is 150 °C or more and 220 °C or less.

Next, the decorative paper 10a is impregnated with the impregnation resin 10b and then dried in an oven to form the resin-impregnated decorative paper 10. The substrate 20 is bonded by hot pressing to the lower side LO of the resin-impregnated decorative paper 10 to provide the resin-impregnated decorative plate 100.

The foamable resin layer 1 foams when it reaches the foaming start temperature during heating by the hot pressing that bonds the resin-impregnated decorative paper 10 and the substrate 20 together, and the foaming forms the uneven pattern 100p on the upper UP surface 2s of the pattern layer 2. The uneven pattern 100p formed in this manner has a surface roughness R of 20 µm or more and 90 µm or less.

The resin-impregnated decorative paper 10 and the substrate 20 may be bonded together by a hot pressing method known as a thermocompression bonding method for decorative plates. Examples of the hot pressing method include a thermocompression bonding method for bonding the resin-impregnated decorative paper 10 and the substrate 20 facing each other in the vertical direction V by heating and pressurizing the paper and the substrate with a flat press plate, and a thermocompression bonding method for bonding the resin-impregnated decorative paper 10 and the substrate 20 facing each other in the vertical direction V by continuously heating and pressurizing the paper and the substrate with circulating cylinder-press endless belts holding them in between.

In the resin-impregnated decorative paper 10 and the resin-impregnated decorative plate 100 according to the present embodiment, the uneven pattern 100p formed by the foaming of the foamable resin layer 1 has a surface roughness R of 20 µm or more and 90 µm or less. Since the surface roughness R is 20 µm or more, the resin-impregnated decorative plate 100 has a good tactile sensation. Furthermore, since the surface roughness R of the uneven pattern 100p is 90 µm or less, the resin-impregnated decorative plate 100 has high scratch resistance and contamination resistance. As a result, it is feasible to provide the resin-impregnated decorative plate 100 that has a surface roughness R combining a good tactile sensation with high scratch resistance and contamination resistance, and to provide the resin-impregnated decorative paper 10 used for the resin-impregnated decorative plate 100.

Although an embodiment of the present invention has been described in detail with reference to the drawings, specific components are not limited to the embodiment, and the invention encompasses design modifications that fall within the scope and spirit of the present disclosure. Additionally, the components indicated in the above embodiment and the modifications provided below may be combined as appropriate.

### (Modification 1)

Although the decorative paper 10a in the above embodiment includes the foamable resin layer 1, the pattern layer 2, and the base paper 3, the decorative paper is not limited to this form. The decorative paper may include a layer having conduit or other representations to give a visually stereoscopic effect and a filler layer to prevent the foamable resin layer 1 or the pattern layer 2 from soaking into the base paper 3.

### (Modification 2)

Although the foamable resin layer 1 in the above embodiment contains the foaming agent 1b made up of the thermally expandable microcapsules, the foamable resin layer is not limited to this form. The foamable resin layer may be a thermally decomposable chemical foaming agent.

### (Modification 3)

Although the heating step for foaming the foamable resin layer 1 in the above embodiment is performed during hot pressing for the resin-impregnated decorative paper 10 and the substrate 20, the step for foaming the foamable resin layer is not limited to this. The step for foaming the foamable resin layer may be performed before or after the resin-impregnated decorative paper and the substrate are bonded together.

### (Modification 4)

Although the resin-impregnated decorative paper 10 and the substrate 20 are bonded together by hot pressing in the above embodiment, the method for bonding the resin-impregnated decorative paper and the substrate is not limited to this. The resin-impregnated decorative paper and the substrate may be bonded together by a method without involving heating.

The present invention will be described in detail with reference to Examples below. The present invention is not limited to the Examples below.

### (Example 1)

Titanium paper was prepared as the base paper 3. The pattern layer 2 was formed by gravure printing on the upper side UP of the base paper 3. The foamable resin layer 1 was formed by gravure printing on the upper side UP of the pattern layer 2. As listed in table 1, thermally expandable microcapsules made from epoxy resin were used as the foaming agent 1b contained in the foamable resin layer 1. The foaming agent 1b has a foaming start temperature of 220 °C and a post-foaming particle size of 220 µm.

The decorative paper 10a thus obtained was impregnated into a melamine resin serving as the impregnation resin 10b and then sufficiently dried in an oven to form the resin-impregnated decorative paper 10. The resin-impregnated decorative paper 10 and a particle board serving as the substrate 20 were bonded together by hot pressing to cause the foaming agent 1b to foam, thus forming the resin-impregnated decorative plate 100 in Example 1. In this process, the resin-impregnated decorative plate 100 was not embossed with a press plate.

### (Example 2)

As listed in table 1, the foaming agent 1b used has a foaming start temperature of 200 °C and a post-foaming particle size of 200 µm. Otherwise, the same method as in Example 1 was used to form the resin-impregnated decorative plate 100 in Example 2.

### (Example 3)

As listed in table 1, thermally expandable microcapsules made from casein resin were used as the foaming agent 1b. The foaming agent 1b has a foaming start temperature of 180 °C and a post-foaming particle size of 150 µm. Otherwise, the same method as in Example 1 was used to form the resin-impregnated decorative plate 100 in Example 3.

### (Example 4)

As listed in table 1, thermally expandable microcapsules made from acrylic resin were used as the foaming agent 1b. The foaming agent 1b has a foaming start temperature of 150 °C and a post-foaming particle size of 100 µm. Otherwise, the same method as in Example 1 was used to form the resin-impregnated decorative plate 100 in Example 4.

### (Comparative Example 1)

As listed in table 1, thermally expandable microcapsules made from casein resin were used as the foaming agent. The foaming agent has a foaming start temperature of 220 °C and a post-foaming particle size of 250 µm. Otherwise, the same method as in Example 1 was used to form a resin-containing decorative plate in Comparative Example 1.

### (Comparative Example 2)

As listed in table 1, thermally expandable microcapsules made from casein resin were used as the foaming agent. The foaming agent has a foaming start temperature of 100 °C and a post-foaming particle size of 50 µm. Otherwise, the same method as in Example 1 was used to form a resin-containing decorative plate in Comparative Example 2.

**[Table 1]**

| | Thermally expandable microcapsule used as foaming agent | | |
|---|---|---|---|
| | Foamable resin | Foaming start temperature | Post-foaming particle size |
| Ex. 1 | Epoxy resin | 220 °c | 200 µm |
| Ex. 2 | Epoxy resin | 200 °c | 200 µm |
| Ex. 3 | Casein resin | 180 °c | 150 µm |
| Ex. 4 | Acrylic resin | 150 °c | 100 µm |
| Comp. Ex. 1 | Casein resin | 220 °c | 250 µm |
| Comp. Ex. 2 | Casein resin | 100 °c | 50 µm |

### (Measurement 1)

For each of the resin-containing decorative plates in Examples 1 to 4 and Comparative Examples 1 and 2, the surface roughness R of the uneven pattern formed by the foaming of the foamable resin layer was measured. A surface roughness meter, SURFCOM 120A, manufactured by Tokyo Seimitsu Co., Ltd. was used for the measurement.

### (Experiment 1)

The resin-containing decorative plates in Examples 1 to 4 and Comparative Examples 1 and 2 were subjected to a scratch resistance test. In the scratch resistance test, each resin-containing decorative plate was subjected to a coin scratch test, and scratches left in the uneven pattern were evaluated.

The evaluation criteria were based on a three-point scale, and plates rated other than "poor" were considered acceptable.
Excellent: No scratches found
Good: Inconspicuous scratches found
Poor: Conspicuous scratches found

### (Experiment 2)

The resin-containing decorative plates in Examples 1 to 4 and Comparative Examples 1 and 2 were subjected to a contamination resistance test. In the contamination resistance test, the uneven pattern of each resin-containing decorative plate was coated with black crayon and red ink and wiped with alcohol after one hour, and the percentage of the residual crayon and ink was evaluated.

The evaluation criteria were based on a three-point scale, and plates rated other than "poor" were considered acceptable.
Excellent: less than 30% residual crayon and ink
Good: 30% or more and less than 70% residual crayon and ink
Poor: 70% or more and 100% or less residual crayon and ink

### (Experiment 3)

The resin-containing decorative plates in Examples 1 to 4 and Comparative Examples 1 and 2 were subjected to a tactile sensation evaluation test. In the tactile sensation evaluation test, ten testers conducted a tactile sensory test for the uneven pattern of each resin-containing decorative plate and evaluated the texture.

The evaluation criteria were based on a three-point scale, and plates rated other than "poor" were considered acceptable.
Excellent: Seven or more and ten or less testers rated the texture as good.
Good: One or more and six or less testers rated the texture as good.
Poor: No testers rated the texture as good.

### (Measurement Results and Experimental Results)

The results of measurement 1 and experiments 1 to 3 are listed in table 2.

Examples 1 to 4 exhibited good results in all the evaluation tests. Examples 2 and 3, in which the surface roughness R was smaller than in Example 1 and greater than in Example 4, exhibited better results.

Comparative Example 1, in which the surface roughness R was 102.1 µm, greatest in Examples 1 to 4 and Comparative Examples 1 and 2, failed the scratch resistance test and the contamination resistance test. Comparative Example 2, in which the surface roughness was 8.6 µm, or smallest, failed the tactile sensation evaluation test.

**[Table 2]**

| | Measurement 1 | Experiment 1 | Experiment 2 | Experiment 3 |
|---|---|---|---|---|
| | Surface roughness r (µm) | Scratch resistance | Contamination resistance | Tactile sensation |
| Ex. 1 | 93.6 | Good | Good | Excellent |
| Ex. 2 | 78.8 | Excellent | Excellent | Excellent |
| Ex. 3 | 38.9 | Excellent | Excellent | Excellent |
| Ex. 4 | 20.8 | Excellent | Excellent | Good |
| Comp. Ex. 1 | 102.1 | Poor | Poor | Excellent |
| Comp. Ex. 2 | 8.6 | Excellent | Excellent | Poor |

### [Industrial Applicability]

The resin-impregnated decorative paper and the resin-impregnated decorative plate according to the present disclosure can provide a resin-impregnated decorative plate that has a surface roughness combining a good tactile sensation with high scratch resistance and contamination resistance, and provide a resin-impregnated decorative paper used for the resin-impregnated decorative plate.

### [Reference Signs List]

- 100: Resin-impregnated decorative plate
- 100p: Uneven pattern
- 100t: Projection
- 100b: Recess
- 10: Resin-impregnated decorative paper
- 10a: Decorative paper
- 10b: Impregnation resin
- 1: Foamable resin layer
- 1a: Foamable-resin-layer resin
- 1b: Foaming agent
- 2: Pattern layer
- 2s: Upper UP surface of pattern layer
- 3: Base paper
- 20: Substrate
- V: Vertical direction
- UP: Upper side
- LO: Lower side
- R: Surface roughness

## Claims

1. A resin-impregnated decorative paper comprising decorative paper impregnated with an impregnation resin, wherein
the decorative paper includes
base paper,
a pattern layer formed by printing on an upper side of the base paper, and
a foamable resin layer stacked on an upper side of the pattern layer and containing a foaming agent,
the foamable resin layer foams to expand in volume, thereby forming an uneven pattern on an upper surface of the pattern layer, and
the uneven pattern has a maximum height of 20 µm or more and 90 µm or less in a vertical direction from a recess to a projection.

2. The resin-impregnated decorative paper according to claim 1, wherein
the foaming agent has a foaming start temperature of 150 °C or more and 220 °C or less, and the foaming agent has a post-foaming particle size of 100 µm or more and 200 µm or less.

3. The resin-impregnated decorative paper according to claim 1 or 2, wherein
the base paper is titanium paper.

4. The resin-impregnated decorative paper according to any one of claims 1 to 3, wherein
the impregnation resin contains a melamine resin.

5. A resin-impregnated decorative plate comprising:
the resin-impregnated decorative paper according to any one of claims 1 to 4; and
a substrate bonded to a lower side of the resin-impregnated decorative paper.
